# EUROPÄISCHE PATENTSCHRIFT

(11) **EP 3 093 219 B1**
(45) Veröffentlichungstag und Bekanntmachung des Hinweises auf die Patenterteilung: **29.08.2018**
(21) Anmeldenummer: 16164706.0
(22) Anmeldetag: 11.04.2016
(51) Int. Cl.: B62D 21/11, B62D 27/06

(54) **BEFESTIGUNGSSYSTEM UND ACHSHILFSRAHMEN**
FASTENING SYSTEM AND AXLE SUBFRAME
SYSTEME DE FIXATION ET CADRE AUXILIAIRE

(30) Priorität: 13.05.2015 DE 102015208898
(43) Veröffentlichungstag der Anmeldung: 16.11.2016
(73) Patentinhaber: Volkswagen Aktiengesellschaft, 38440 Wolfsburg (DE)
(72) Erfinder: Pavel, Alexander, 38440 Wolfsburg (DE)

(56) Entgegenhaltungen:
- EP-A1- 1 253 066
- EP-A1- 2 902 303
- WO-A1-2005/075281
- DE-A1- 3 718 841
- FR-A1- 2 984 237

## Beschreibung

Die Erfindung betrifft ein Befestigungssystem zur Anbindung eines Achshilfsrahmens an eine Karosserie eines Fahrzeugs sowie einen Achshilfsrahmen zur Anbindung einer Achse an eine Karosserie eines Fahrzeugs.

Lenkbare Vorderachsen von Kraftfahrzeugen weisen oftmals einen Achshilfsrahmen auf, an dem beidseitig radführende Querlenker angeordnet sind. Bekannte Achshilfsrahmen sind als mehrteilige Blechkonstruktion ausgebildet und weisen beispielsweise zwei zusammengesetzte Hilfsrahmenteile auf, die auch als Hilfsrahmenoberteil bzw. Hilfsrahmenunterteil bezeichnet werden. Zum Anbinden des Achshilfsrahmens an ein Tragelement einer Karosserie bzw. eines Rohbaus eines Kraftfahrzeugs weisen Hilfsrahmenoberteil und Hilfsrahmenunterteil koaxiale Ausnehmungen zur Durchführung von Verbindungsschrauben auf.

Zur Versteifung einer Anbindung des Achshilfsrahmens an der Karosserie kommen Hülsen zum Einsatz, die in die Ausnehmungen einführbar sind und ein Zusammendrücken von Hilfsrahmenoberteil und Hilfsrahmenunterteil an den Verschraubungsstellen mit der Karosserie durch eine formschlüssige Verbindung verhindern. Die Hülsen weisen einen Kopfbereich mit einem größeren Außendurchmesser als der Innendurchmesser des Achshilfsrahmens auf, auf denen die Karosserie nach dem Befestigen am Achshilfsrahmen aufliegt. Um eine Relativbewegung der Hülsen zum Achshilfsrahmen zu vermeiden, sind die Hülsen am Achshilfsrahmen geklemmt bzw. durch Prägungen (Warzen) fixiert oder mit diesem verschweißt. Um einen Verschleiß der Hülsen zu reduzieren ist es bekannt, die Hülsen komplett zu vergüten, damit diese eine höhere Härte als die Karosserie aufweisen.

Bekannte Hülsen haben beispielsweise den Nachteil, dass zwischen diesen und der Karosserie Kräfte auftreten können, die sich in einer extremen Belastungssituation stoßartig durch ein relatives Rutschen des Achshilfsrahmens zur Karosserie entladen und somit die positive Kundenwahrnehmung beeinträchtigen. Dieser Vorgang wird auch als Hilfsrahmenrutschen bezeichnet und verursacht oftmals ein relativ lautes Knackgeräusch. Des Weiteren haben bekannte Hülsen oftmals den Nachteil, dass bereits ein geringfügiger Verzug des Achshilfsrahmens zu einer Überdeckung von Innendurchmesser der Hülse und Hilfsrahmenunterteil führen kann. Eine Überdeckung bedeutet, dass ein effektiver Querschnitt zum Durchführen eines Befestigungsbolzens verringert bzw. der erforderliche Toleranzausgleich eingeschränkt wird, da Hülse und Ausnehmung durch den Verzug des Achshilfsrahmens nicht mehr koaxial zueinander angeordnet sind. Hierdurch kann eine Montage des Achshilfsrahmens an die Karosserie wesentlich erschwert werden bzw. unmöglich sein. Des Weiteren kann das Einführen einer Fixiervorrichtung im Kundendienstfall unmöglich sein. Ferner sind komplett vergütete Hülsen sehr teuer in der Herstellung. Schließlich haben bekannte Hülsen den Nachteil, dass diese nicht ausreichend robust mit dem Achshilfsrahmen verbindbar sind.

Dokument DE 37 18 841 A1 offenbart die Merkmale des Oberbegriffs des unabhängigen Anspruchs 1. Es ist daher die Aufgabe der vorliegenden Erfindung, ein Befestigungssystem zur Anbindung eines Achshilfsrahmens an eine Karosserie eines Fahrzeugs bereitzustellen, das die Nachteile des Stands der Technik zumindest teilweise nicht aufweist. Insbesondere ist es die Aufgabe der Erfindung, ein Befestigungssystem zur Anbindung eines Achshilfsrahmens an eine Karosserie eines Fahrzeugs bereitzustellen, das eine sichere sowie verbesserte Befestigung des Achshilfsrahmens an der Karosserie auf kostengünstige Weise sowie mit einfachen Mitteln ermöglicht. Überdies ist es die Aufgabe der vorliegenden Erfindung, einen Achshilfsrahmen bereitzustellen, der die aus dem Stand der Technik bekannten Nachteile zumindest teilweise nicht aufweist. Insbesondere ist es die Aufgabe der Erfindung, einen Achshilfsrahmen bereitzustellen, der sicher an eine Karosserie eines Fahrzeugs anbindbar sowie kostengünstig herstellbar ist.
Die Aufgabe wird durch die Patentansprüche gelöst. Gemäß einem ersten Aspekt der Erfindung wird die Aufgabe erfindungsgemäß gelöst durch ein Befestigungssystem mit den Merkmalen des Anspruchs 1. Gemäß einem zweiten Aspekt der Erfindung wird die Aufgabe erfindungsgemäß gelöst durch einen Achshilfsrahmen mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Befestigungssystem beschrieben sind, selbstverständlich auch im Zusammenhang mit dem erfindungsgemäßen Achshilfsrahmen und jeweils umgekehrt, so dass bezüglich der Offenbarung zu den einzelnen Erfindungsaspekten stets wechselseitig Bezug genommen wird bzw. werden kann.
Gemäß einem ersten Aspekt der Erfindung wird die Aufgabe gelöst durch ein Befestigungssystem zur Anbindung eines Achshilfsrahmens an eine Karosserie eines Fahrzeugs. Das Befestigungssystem weist ein Auflageteil mit einer Karosserieseite, einer Hilfsrahmenseite sowie einer Auflageausnehmung und eine Hülse mit einem ersten Endbereich, einem zweiten Endbereich sowie einer Hülsenausnehmung auf. Die Hilfsrahmenseite des Auflageteils ist an einer ersten Seite einer ersten Wand des Achshilfsrahmens und der zweite Endbereich der Hülse ist an einer zweiten Wand des Achshilfsrahmens derart anordenbar, dass die Auflageausnehmung und die Hülsenausnehmung koaxial zueinander angeordnet sind. Die Auflageausnehmung und die Hülsenausnehmung sind zur Durchführung eines Schafts eines Befestigungsmittels zum Verbinden des Achshilfsrahmens mit der Karosserie ausgebildet. Die Karosserieseite weist eine Anlagefläche zur Anlage der Karosserie auf, wobei das Auflageteil eine größere Härte als die Hülse aufweist, wobei das Auflageteil vergütet und die Hülse nicht vergütet ist, und wobei das Auflageteil mindestens eine strukturierte Oberfläche aufweist. Ein Befestigungssystem ist im Sinne der Erfindung eine mehrteilige Vorrichtung, die zum Anbinden einer ersten Baugruppe, wie z.B. eines Achshilfsrahmens, an einer zweiten Baugruppe, wie z.B. einer Karosserie bzw. einem Rohbau eines Fahrzeugs, ausgebildet ist bzw. ein derartiges Anbinden ermöglicht bzw. unterstützt. Es können demnach neben dem Befestigungssystem noch weitere Befestigungskomponenten, wie z.B. Schrauben, Bolzen, Muttern und/oder Niete, zur Anbindung der beiden Baugruppen vorgesehen bzw. erforderlich sein. Durch das Befestigungssystem wird beispielsweise eine hohe Vorspannkraft einer Befestigungsschraube ermöglicht, ohne dass hierdurch Hilfsrahmen und Karosserie verformt werden. Ferner ist das Befestigungssystem zumindest teilweise zwischen den miteinander zu verbindenden Baugruppen derart anordenbar, dass die beiden Baugruppen - zumindest im Bereich des Befestigungssystems - keinen direkten Kontakt miteinander aufweisen. Hierdurch wird verhindert, dass die Baugruppen direkt aufeinander abgleiten und dabei lästige Geräusche erzeugen. Ein Verschleiß der Baugruppen ist hierdurch ebenfalls reduzierbar.
Achshilfsrahmen werden bei gelenkten Achsen eines modernen Kraftfahrzeugs häufig verwendet. Sie sind als vormontierte Einheit bereitstellbar und mittels des erfindungsgemäßen Befestigungssystems mit einfachen Mitteln an der Karosserie bzw. dem Rohbau des Kraftfahrzeugs anbindbar.
Das Befestigungssystem weist ein Auflageteil mit einer Auflageausnehmung und eine Hülse mit einer Hülsenausnehmung auf. Das Auflageteil ist an einer der Karosserie zugewandten Seite des Hilfsrahmens anordenbar und dient der Aufnahme bzw. Auflage der Karosserie. Durch das Auflageteil wird gewährleistet, dass die Karosserie nicht direkt auf dem Hilfsrahmen aufliegt. Ferner ist das Auflageteil zur Durchführung eines Befestigungsmittels, wie z.B. eines Bolzens, einer Schraube oder eines Niets, zum Fixieren des Hilfsrahmens an der Karosserie bzw. dem Rohbau des Fahrzeugs ausgebildet. Die Hülse ist zumindest teilweise innerhalb des Hilfsrahmens zwischen einer ersten Wand und einer zweiten Wand des Hilfsrahmens anordenbar. Die Hülse dient der Durchführung des Befestigungsmittels zum Fixieren des Hilfsrahmens an der Karosserie bzw. dem Rohbau des Fahrzeugs. Neben der Führung des Befestigungsmittels hat die Hülse die Funktion, ein Zusammendrücken der ersten Wand und der zweiten Wand aufgrund von durch das Befestigungsmittel bewirkten Spannkräften zu verhindern. Somit ist mittels der Hülse z.B. die erste Wand gegen die zweite Wand abgestützt. Ein Kraftfluss verläuft beispielsweise vom Befestigungsmittel über einen ersten Anschlussabschnitt der Karosserie, das Auflageteil und die erste Wand durch die Hülse und einen zweiten Anschlussabschnitt der Karosserie zum Befestigungsmittel. Alternativ kann der Kraftfluss unter Umgehung der ersten Wand auch direkt von dem Auflageteil zur Hülse verlaufen.
Das Auflageteil weist eine größere Härte als die Hülse auf. Dabei ist bevorzugt, dass das Auflageteil eine größere Härte als der an dem Auflageteil anordenbare Teil der Karosserie aufweist, um eine sichere Anbindung des Hilfsrahmens an der Karosserie zu gewährleisten. Die Hülse benötigt keine derartige Härte wie das Auflageteil und ist daher insbesondere aus Wirtschaftlichkeitsgründen beziehungsweise Kostengründen mit einer geringeren Härte ausgelegt. Da Hülse und Auflageteil jeweils als separate Bauteile ausgebildet sind, ist dies problemlos und mit einfachen Mitteln möglich.
Das erfindungsgemäße Befestigungssystem hat gegenüber aus dem Stand der Technik bekannten Befestigungssystemen den Vorteil, dass es leicht am Hilfsrahmen anordenbar ist und auch bei einem geringfügigen Verzug des Hilfsrahmens ein leichtes Einführen eines Befestigungsmittels gewährleistet. Dies ist sowohl für die Montage als auch bei der Instandsetzung von Vorteil. Ferner hat das Befestigungssystem den Vorteil, dass es kostengünstiger herstellbar ist, da nicht sämtliche Komponenten des Befestigungssystems die gleiche Härte aufweisen und die Herstellung einer Komponente mit einer geringeren Härte kostengünstiger als die Herstellung der Komponente mit einer größeren Härte ist.
Vorzugsweise weist die Hülsenausnehmung einen größeren Durchmesser als die Auflageausnehmung auf. Hierdurch werden ein leichtes Durchstecken des Befestigungsmittels durch die Hülse sowie ein seitlicher Halt des Befestigungsmittels in der Auflageausnehmung gewährleistet. Erfindungsgemäß ist das Auflageteil vergütet wobei die Hülse nicht vergütet ist. Vorzugsweise ist das Auflageteil aus einem vergütbaren Material und die Hülse aus einem nicht vergütbaren Material, wie z.B. einem unlegierten Qualitätsstahl, hergestellt. Auf diese Weise weist das Auflageteil eine größere Härte als die Hülse auf. Ein Vergüten der Hülse ist nicht notwendig. Durch die Einsparung des Vergütens der Hülse sind Fertigungskosten einsparbar. Vergüten bedeutet, dass das Auflageteil zug-/ dauerfester und härter ist als die Hülse. Das Auflageteil ist durch Wärmebehandlung vergütet worden. D.h., das Auflageteil ist durch Erwärmung beziehungsweise Austenitisierung, vorzugsweise auf eine Temperatur größer als 700°C, und anschließendem Kühlprozess, dem sogenannten Härten, gefestigt worden. Ferner ist das Auflageteil zur Erzielung einer Zähigkeit angelassen worden, d.h. nochmals erwärmt worden, vorzugsweise auf eine Temperatur von ca. 500°C. Ein derartig vergütetes Auflageteil weist eine hohe Härte auf.

In einer vorteilhaften Ausgestaltung der Erfindung weist auch die Hülse mindestens eine strukturierte Oberfläche auf. Eine strukturierte Oberfläche ist im Sinne der Erfindung eine Oberfläche, die beispielsweise mindestens ein Formelement, wie z.B. einen Vorsprung oder eine Rille, und/oder eine bestimmte Rauheit, aufweist. Die strukturierte Oberfläche ist vorzugsweise derart ausgebildet, dass ein Haften der Karosserie auf der strukturierten Oberfläche verbessert und das Risiko eines Abrutschens der Karosserie auf der strukturierten Oberfläche somit verringert ist. Hierdurch sind ungewollte Geräusche während der Fahrt verhinderbar und ein Verschleiß der Karosserie reduzierbar.
Vorzugsweise weist die strukturierte Oberfläche eine Verzahnung und/oder eine rutschhemmende Oberfläche auf. Eine Verzahnung und eine rutschhemmende Oberfläche haben den Vorteil, dass diese leicht herstellbar sind und das Risiko des Abrutschens der Karosserie auf der strukturierten Oberfläche, ungewollte Geräusche sowie den Verschleiß mit einfachen Mitteln reduzieren.
Weiter bevorzugt ist die strukturierte Oberfläche auf mindestens der Karosserieseite des Auflageteils und/oder der Stirnseite des zweiten Endbereichs der Hülse angeordnet. An diesen Stirnseiten ist das Befestigungssystem in eingebauten Zustand vorzugsweise an der Karosserie angeordnet. Eine strukturierte Oberfläche auf anderen Bereichen des Befestigungssystems, die nicht mit der Karosserie in Eingriff bringbar sind, ist nicht erforderlich. Eine derartige Anordnung der strukturierten Oberfläche hat den Vorteil, dass eine Kontaktfläche von strukturierter Oberfläche und Karosserie somit maximiert ist. Durch ein derart gezieltes Anordnen der strukturierten Oberfläche sind Herstellungskosten des Befestigungssystems reduzierbar.
Es ist vorteilhaft, dass das Auflageteil auf der Hilfsrahmenseite an der Auflageausnehmung eine Abrundung und/oder Fase aufweist. Auf diese Weise wird das Einführen eines Befestigungsmittels, wie z.B. einer Schraube oder eines Bolzens, bzw. der Fixiervorrichtung im Kundendienstfall über die Hülse in das Auflageteil verbessert, da das Befestigungsmittel beim weiteren Einführen in die Hülse durch die Abrundung oder Fase in die Auflageausnehmung gelenkt wird. Ein Verkanten des Befestigungsmittels an einer hilfsrahmenseitigen Öffnung der Auflageausnehmung ist somit mit einfachen Mitteln verhinderbar.
In einer vorteilhaften Ausgestaltung der Erfindung weist das Auflageteil eine Aussparung zur vorzugsweise formschlüssigen Aufnahme eines Abschnitts des ersten Endbereichs der Hülse auf. Im montierten Zustand ist der erste Endbereich der Hülse in der Aussparung angeordnet. Ein Kraftfluss verläuft somit nicht mehr von der Hülse über die erste Wand in das Auflageteil, sondern direkt von der Hülse in das Auflageteil. Dies hat insbesondere den Vorteil, dass eine Verbindung von Hilfsrahmen und Karosserie mit höherer Festigkeit und geringerem Verschleiß auf diese Weise herstellbar ist. Überdies ist ein Einführen eines Befestigungsmittels durch die Hülse in das Auflageteil hierdurch verbessert, da die Hülse durch die Aussparung optimal relativ zum Auflageteil ausgerichtet ist und das Befestigungsmittel somit in die Auflageausnehmung führt. Selbst bei einem geringfügigen Verzug des Hilfsrahmens bleibt diese Führung bestehen.

Vorzugsweise weist das Auflageteil zur Befestigung an der ersten Wand des Hilfsrahmens auf der Hilfsrahmenseite einen größeren Umfang als auf der Karosserieseite auf. Hierdurch wird zum einen ein Durchrutschen des Auflageteils durch eine erste Ausnehmung der ersten Wand des Hilfsrahmens, z.B. bei der Montage des Befestigungssystems, verhindert. Darüber hinaus ist das Auflageteil somit besser an der ersten Wand fixierbar, da zum Fixieren z.B. ein größerer Nahtbereich bzw. eine längere Nahtstrecke zur Verfügung steht. Schließlich ist somit ein Gesamtgewicht des Auflageteils bei gleichzeitig verbesserter Festigkeit reduzierbar.

Es ist bevorzugt, dass das Auflageteil zur Befestigung an der ersten Wand des Hilfsrahmens auf der Hilfsrahmenseite einen Flansch aufweist. Ein Flansch ist vorzugsweise umlaufend bzw. im Wesentlichen umlaufend ausgebildet und gewährleistet eine sichere Auflage sowie ein sicheres Fixieren des Auflageteils an der ersten Wand. So kann das Auflageteil im Bereich des Flansches gut an der ersten Wand verschweißt werden.

Ebenfalls bevorzugt weist die Hülse zur Befestigung an der zweiten Wand im zweiten Endbereich einen größeren Umfang als im ersten Endbereich auf. Weiter bevorzugt weist die Hülse zur Befestigung an der zweiten Wand im zweiten Endbereich einen Flansch auf, der vorzugsweise umlaufend bzw. im Wesentlichen umlaufend ausgebildet ist. Hierdurch wird zum einen ein Durchrutschen der Hülse durch eine zweite Ausnehmung der zweiten Wand des Hilfsrahmens, z.B. bei der Montage des Befestigungssystems, verhindert. Darüber hinaus ist die Hülse somit besser an der zweiten Wand fixierbar, da zum Fixieren z.B. ein größerer Nahtbereich bzw. eine längere Nahtstrecke zur Verfügung steht.

Vorzugsweise sind das Auflageteil und/oder die Hülse aus einem schweißbaren Material ausgebildet. Somit sind Auflageteil und/oder Hülse am Hilfsrahmen anschweißbar. Besonders bevorzugt sind das Auflageteil und die Hülse aus einem schweißbaren Material ausgebildet. Schweißen hat den Vorteil, dass eine besonders feste sowie gut belastbare Fixierung des Auflageteils und/oder der Hülse am Hilfsrahmen erzielbar ist.

Gemäß einem zweiten Aspekt der Erfindung wird die Aufgabe erfindungsgemäß gelöst durch einen Achshilfsrahmen zur Anbindung einer Achse an eine Karosserie eines Fahrzeugs. Der Achshilfsrahmen weist ein Hilfsrahmenoberteil mit einer ersten Wand und ein Hilfsrahmenunterteil mit einer zweiten Wand auf, wobei das Hilfsrahmenoberteil und das Hilfsrahmenunterteil miteinander verbunden sind. Die erste Wand weist mindestens eine erste Ausnehmung und die zweite Wand mindestens eine zweite Ausnehmung auf, wobei die mindestens eine erste Ausnehmung und die mindestens eine zweite Ausnehmung voneinander beabstandet sowie miteinander fluchtend angeordnet sind. Der Achshilfsrahmen weist zur Anbindung an die Karosserie ein erfindungsgemäßes Befestigungssystem auf. Ein Auflageteil des Befestigungssystems, das eine Auflageausnehmung aufweist, ist mit der ersten Ausnehmung an der ersten Wand angeordnet. Eine Hülse des Befestigungssystems, die eine Hülsenausnehmung aufweist, ist an der zweiten Wand derart angeordnet, dass die Auflageausnehmung und die Hülsenausnehmung miteinander fluchten. Die Hülse erstreckt sich durch die zweite Ausnehmung hindurch bis zur ersten Wand hin oder bis zum Auflageteil.

Der Achshilfsrahmen ist vorzugsweise für eine lenkbare Achse, insbesondere eine Vorderradachse, ausgebildet. Hilfsrahmenoberteil und Hilfsrahmenunterteil können erfindungsgemäß auch einteilig ausgebildet und können beispielsweise mittels eines 3D-Druckers hergestellt sein. Vorzugsweise ist der Achshilfsrahmen ganz oder zumindest teilweise aus einem schweißbaren Material gefertigt, um ein Anschweißen des Befestigungssystems zu ermöglichen.

Der Achshilfsrahmen hat gegenüber aus dem Stand der Technik bekannten Achshilfsrahmen den Vorteil, dass dieser besonders kostengünstig herstellbar ist, da nicht sämtliche Komponenten des Befestigungssystems die gleiche Härte aufweisen und die Herstellung einer Komponente mit einer geringeren Härte kostengünstiger als die Herstellung der Komponente mit einer größeren Härte ist. Ferner wird auch bei einem geringfügigen Verzug des Hilfsrahmens ein leichtes Einführen eines Befestigungsmittels gewährleistet. Dies ist sowohl für die Montage als auch Instandsetzung von Vorteil.

Vorzugsweise sind das Auflageteil und/oder die Hülse an dem Achshilfsrahmen angeschweißt. Eine Schweißverbindung hat den Vorteil, dass das Auflageteil und/oder die Hülse besonders sicher bzw. fest am Hilfsrahmen fixiert sind.

Weiter bevorzugt liegt die Hülse an der ersten Wand an. Dabei kann vorgesehen sein, dass die Hülse in einer ersten Ausführungsform stirnseitig an der ersten Wand anliegt oder in einer zweiten Ausführungsform längsseitig an der ersten Wand anliegt bzw. der ersten Wand benachbart ist. In der ersten Ausführungsform ist die erste Wand mittels des Befestigungsmittels zwischen Hülse und Auflageteil klemmbar. In der zweiten Ausführungsform ist die Hülse relativ zur ersten Wand auf vorteilhafte Weise geführt, z.B. über die erste Wand oder die Auflageausnehmung des Auflageteils, so dass in diesem Bereich eine Steifigkeit des Hilfsrahmens erhöht wird. Ein Montieren des Befestigungsmittels wird somit ebenfalls erleichtert. Ein Kraftfluss verläuft in der zweiten Ausführungsform direkt von der Hülse in das Auflageteil.

Es ist bevorzugt, dass die Hülsenausnehmung einen Innendurchmesser aufweist, der größer als ein Innendurchmesser der Auflageausnehmung und kleiner als ein Innendurchmesser der ersten Ausnehmung und/oder der zweiten Ausnehmung ist. Dies hat den Vorteil, dass ein Befestigungsmittel leicht durch die Hülse durchführbar ist und von dem Auflageteil gut seitlich geführt ist. Eine Kollision beim Einführen des Befestigungsmittels mit der ersten Ausnehmung oder der zweiten Ausnehmung wird somit auch bei einem leicht verzogenen Achshilfsrahmen verhindert.

Im Folgenden wird die Erfindung anhand von Zeichnungen näher erläutert. In den Figuren zeigt jeweils schematisch:
- Figur 1:: eine Seitenansicht auf einen Ausschnitt eines Achshilfsrahmens mit einer daran angeordneten ersten Variante eines Befestigungssystems nach dem Stand der Technik;
- Figur 2:: eine Seitenansicht auf einen Ausschnitt eines Achshilfsrahmens mit einer daran angeordneten zweiten Variante eines Befestigungssystems nach dem Stand der Technik;
- Figur 3:: eine Seitenansicht auf einen Ausschnitt eines Achshilfsrahmens mit einer daran angeordneten ersten Ausführungsform eines Befestigungssystems gemäß der Erfindung; und
- Figur 4:: eine Seitenansicht auf einen Ausschnitt eines Achshilfsrahmens mit einer daran angeordneten zweiten Ausführungsform eines Befestigungssystems gemäß der Erfindung.

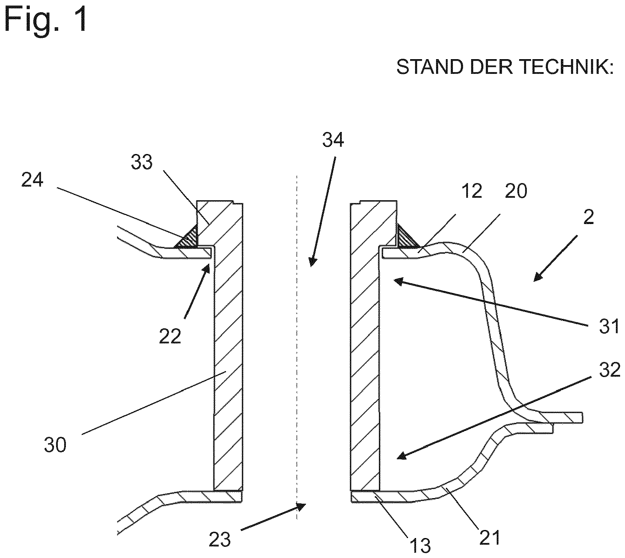

Der in Fig. 1 in einem Ausschnitt gezeigte Achshilfsrahmen 2 weist ein Hilfsrahmenoberteil 20 mit einer ersten Wand 12 sowie ein Hilfsrahmenunterteil 21 mit einer zweiten Wand 13 auf, die miteinander verbunden sind. Das Hilfsrahmenoberteil 20 weist eine erste Ausnehmung 22 auf, die fluchtend zu einer zweiten Ausnehmung 23 des Hilfsrahmenunterteils 21 angeordnet ist.

Durch die erste Ausnehmung 22 ist ein Teilbereich einer Stützhülse 30 eingeführt. Die Stützhülse 30 weist einen ersten Stützhülsenbereich 31, einen zweiten Stützhülsenbereich 32 sowie eine zentrale, sich in Längsrichtung der Stützhülse 30 erstreckende zentrale Stützhülsenausnehmung 34 auf, die zur Durchführung eines Teils eines Befestigungsmittels, wie z.B. eines Schrauben- oder Bolzenschafts, ausgebildet ist. Der erste Stützhülsenbereich 31 weist an einem Ende der Stützhülse 30 einen Stützkranz 33 auf, der auf einer der zweiten Wand 13 abgewandten Seite der ersten Wand 12 aufliegt und mit dieser mittels einer Schweißnaht 24 verschweißt ist. Ein Ende des zweiten Stützhülsenbereichs 32 liegt an einer der ersten Wand 12 zugewandten Seite der zweiten Wand 13 an und ist mit dieser über ein nicht gezeigtes Befestigungsmittel - beispielsweise beim Befestigen des Hilfsrahmens an einer Karosserie - verspannbar. Diese erste Variante eines Befestigungssystems gemäß dem Stand der Technik hat insbesondere den Nachteil, dass ein relatives Verziehen von Hilfsrahmenoberteil 20 und Hilfsrahmenunterteil 21 ein Einführen des Befestigungsmittels oder der Fixiervorrichtung durch die zweite Ausnehmung 23 in die Stützhülsenausnehmung 34 erschwert bzw. blockiert werden kann. Ferner weist die komplette Stützhülse 30 eine im Verhältnis zur Karosserie hohe Härte auf und ist daher nur sehr kostenintensiv herstellbar.

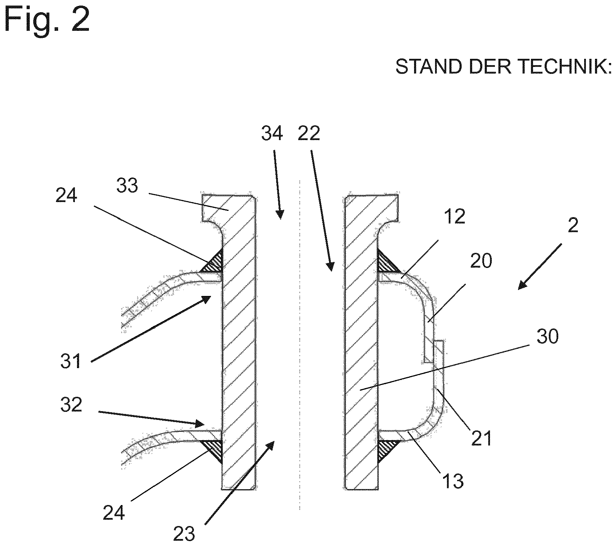

Die in Fig. 2 gezeigte zweite Variante eines Befestigungssystems 1 gemäß dem Stand der Technik weist eine ähnliche Stützhülse 30 wie in Fig. 1 auf. Der Stützkranz 33 des ersten Stützhülsenbereichs 31 liegt bei dieser zweiten Variante nicht an der ersten Wand 12 an, wobei eine Seitenwand des ersten Stützhülsenbereichs 31 mittels einer Schweißnaht 24 an der ersten Wand 12 angeschweißt ist. Der zweite Stützhülsenbereich 32 ist durch die zweite Ausnehmung 23 der zweiten Wand 13 geführt und mittels einer Schweißnaht 24 an der zweiten Wand 13 angeschweißt. Diese zweite Variante hat insbesondere den Nachteil, dass eine Montage der Stützhülse 30 sehr aufwändig ist, da diese durch die erste Ausnehmung 22 und die zweite Ausnehmung 23 geführt werden muss. Ferner weist die komplette Stützhülse 30 eine im Verhältnis zur Karosserie hohe Härte auf und ist daher nur sehr kostenintensiv herstellbar.

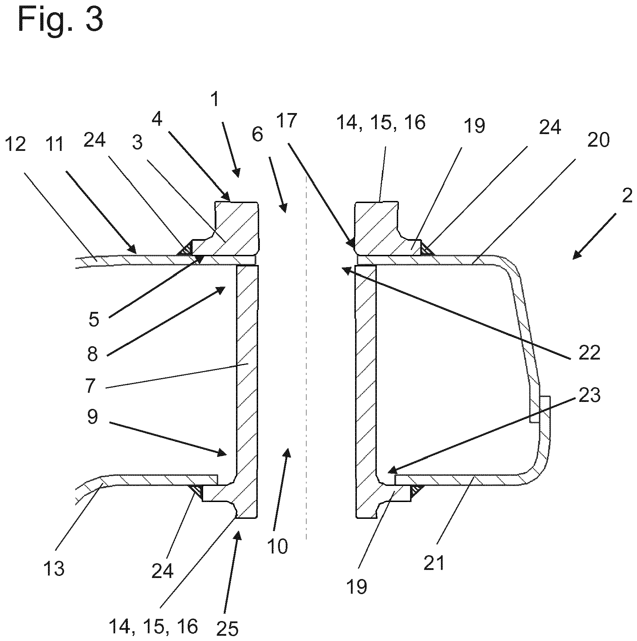

In Fig. 3 ist ein Ausschnitt eines erfindungsgemäßen Achshilfsrahmens 2 mit einer daran angeordneten ersten Ausführungsform eines erfindungsgemäßen Befestigungssystems 1 abgebildet. Das Befestigungssystem 1 weist ein Auflageteil 3 mit einer Karosserieseite 4 und einer Hilfsrahmenseite 5 auf, wobei das Auflageteil 3 auf der Hilfsrahmenseite 5 einen Flansch 19 aufweist. Der Flansch 19 ist mittels einer vorzugsweise umlaufenden Schweißnaht 24 an der ersten Wand 12 des Hilfsrahmenoberteils 20 gehalten. Eine Auflageausnehmung 6 des Auflageteils 3 ist fluchtend zu der ersten Ausnehmung 22 des Hilfsrahmenoberteils 20 und der zweiten Ausnehmung 23 des Hilfsrahmenunterteils 21 angeordnet. Auf der Karosserieseite 4 weist das Auflageteil 3 eine Anlagefläche 14 zur Anlage der Karosserie auf. Die Anlagefläche 14 ist als strukturierte Oberfläche 15 mit einer Verzahnung 16 ausgebildet.

Das Befestigungssystem 1 weist eine Hülse 7 mit einem ersten Endbereich 8 und einem zweiten Endbereich 9 sowie einer sich in Längsrichtung der Hülse 7 erstreckenden zentralen Hülsenausnehmung 10 auf. Die Hülse 7 ist derart durch die zweite Ausnehmung 23 der zweiten Wand 13 des Hilfsrahmenunterteils 21 gesteckt, dass ein am zweiten Endbereich 9 ausgebildeter Flansch 19 der Hülse 7 an einer der ersten Wand 12 abgewandten Seite der zweiten Wand 13 anliegt und mit der zweiten Wand 13 mittels einer vorzugsweise umlaufenden Schweißnaht 24 gehalten ist. Der erste Endbereich 8 der Hülse 7 liegt an der ersten Wand 12 derart an, dass die Hülsenausnehmung 10 fluchtend zur Auflageausnehmung 6 angeordnet ist. Das Auflageteil 3 weist auf der Hilfsrahmenseite 5 an der Auflageausnehmung 6 eine Abrundung 17 auf. Hierdurch wird das hülsenseitige Einführen eines nicht abgebildeten Befestigungsmittels in die Auflageausnehmung 6 erleichtert.

Vorzugsweise weist die Hülse 7 auf einer Stirnseite 14 des zweiten Endbereichs 9 ebenfalls eine strukturierte Oberfläche 15 auf, die als Verzahnung 16 ausgebildet ist. Das Auflageteil 3 weist eine größere Härte als die Hülse 7 auf. Demnach ist das erfindungsgemäße Befestigungssystem 1 besonders kostengünstig herstellbar. In dieser ersten Ausführungsform verläuft ein Kraftfluss von der Hülse 7 über die erste Wand 12 in das Auflageteil 3.

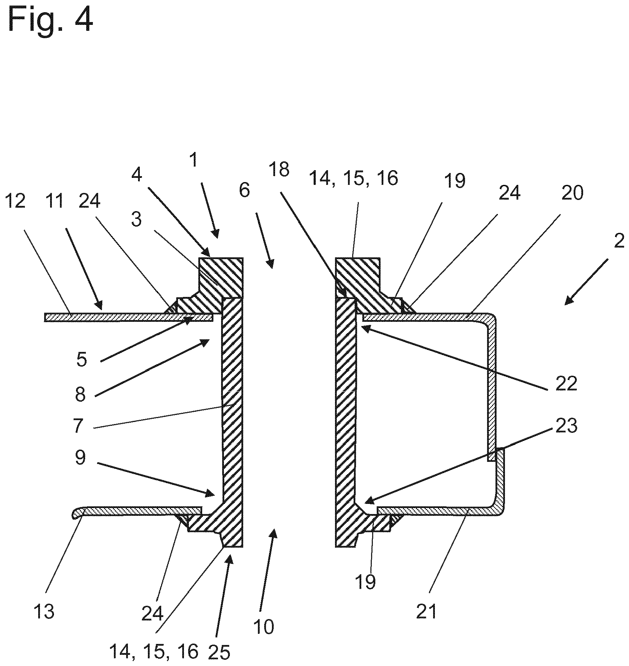

In Fig. 4 ist ein Ausschnitt eines erfindungsgemäßen Achshilfsrahmens 2 mit einer daran angeordneten zweiten Ausführungsform eines erfindungsgemäßen Befestigungssystems 1 abgebildet. Das Befestigungssystem 1 weist ein Auflageteil 3 mit einer Karosserieseite 4 und einer Hilfsrahmenseite 5 auf, wobei das Auflageteil 3 auf der Hilfsrahmenseite 5 einen Flansch 19 aufweist. Der Flansch 19 ist mittels einer vorzugsweise umlaufenden Schweißnaht 24 an der ersten Wand 12 des Hilfsrahmenoberteils 20 gehalten. Eine Auflageausnehmung 6 des Auflageteils 3 ist fluchtend zu der ersten Ausnehmung 22 des Hilfsrahmenoberteils 20 und der zweiten Ausnehmung 23 des Hilfsrahmenunterteils 21 angeordnet. Das Auflageteil 3 weist auf der Hilfsrahmenseite 5 an der Auflageausnehmung 6 eine Aussparung 18 zur Aufnahme eines Teils eines ersten Endbereichs 8 einer Hülse 7 auf.

Das Befestigungssystem 1 weist eine Hülse 7 mit einem ersten Endbereich 8 und einem zweiten Endbereich 9 sowie einer sich in Längsrichtung der Hülse 7 erstreckenden zentralen Hülsenausnehmung 10 auf. Die Hülse 7 ist derart durch die zweite Ausnehmung 23 der zweiten Wand 13 des Hilfsrahmenunterteils 21 gesteckt, dass ein am zweiten Endbereich 9 ausgebildeter Flansch 19 der Hülse 7 an einer der ersten Wand 12 abgewandten Seite der zweiten Wand 13 anliegt und mit der zweiten Wand 13 mittels einer vorzugsweise umlaufenden Schweißnaht 24 gehalten ist. Der erste Endbereich 8 der Hülse 7 ist durch die erste Ausnehmung 22 der ersten Wand 12 des Hilfsrahmenoberteils 20 in die Aussparung 18 des Auflageteils 3 eingeführt und liegt stirnseitig an dem Auflageteil 3 an. Die Hülsenausnehmung 10 ist somit fluchtend zur Auflageausnehmung 6 angeordnet. Hierdurch wird das hülsenseitige Einführen eines Befestigungsmittels oder einer Fixiervorrichtung im Kundendienstfall in die Auflageausnehmung 6 erleichtert.

Auf der Karosserieseite 4 weist das Auflageteil 3 eine Anlagefläche 14 zur Anlage der Karosserie auf. Die Anlagefläche 14 ist als strukturierte Oberfläche 15 mit einer Verzahnung 16 ausgebildet. Vorzugsweise weist die Hülse 7 auf einer Stirnseite 25 des zweiten Endbereichs 9 ebenfalls eine strukturierte Oberfläche 15 auf, die als Verzahnung 16 ausgebildet ist. Das Auflageteil 3 weist eine größere Härte als die Hülse 7 auf. Demnach ist das erfindungsgemäße Befestigungssystem 1 besonders kostengünstig herstellbar. In dieser zweiten Ausführungsform verläuft ein Kraftfluss direkt von der Hülse 7 in das Auflageteil 3.

### Bezugszeichenliste

- 1: Befestigungssystem
- 2: Achshilfsrahmen
- 3: Auflageteil
- 4: Karosserieseite
- 5: Hilfsrahmenseite
- 6: Auflageausnehmung
- 7: Hülse
- 8: erster Endbereich
- 9: zweiter Endbereich
- 10: Hülsenausnehmung
- 11: erste Seite
- 12: erste Wand
- 13: zweite Wand
- 14: Anlagefläche
- 15: strukturierte Oberfläche
- 16: Verzahnung
- 17: Abrundung
- 18: Aussparung
- 19: Flansch
- 20: Hilfsrahmenoberteil
- 21: Hilfsrahmenunterteil
- 22: erste Ausnehmung
- 23: zweite Ausnehmung
- 24: Schweißnaht
- 25: Stirnseite
- 30: Stützhülse
- 31: erster Stützhülsenbereich
- 32: zweiter Stützhülsenbereich
- 33: Stützkranz
- 34: Stützhülsenausnehmung

## Patentansprüche

1. Befestigungssystem (1) zur Anbindung eines Achshilfsrahmens (2) an eine Karosserie eines Fahrzeugs, aufweisend ein Auflageteil (3) mit einer Karosserieseite (4), einer Hilfsrahmenseite (5) sowie einer Auflageausnehmung (6) und eine Hülse (7) mit einem ersten Endbereich (8), einem zweiten Endbereich (9) sowie einer Hülsenausnehmung (10), wobei die Hilfsrahmenseite (5) des Auflageteils (3) an einer ersten Seite (11) einer ersten Wand (12) des Achshilfsrahmens (2) und der zweite Endbereich (9) der Hülse (7) an einer zweiten Wand (13) des Achshilfsrahmens (2) derart anordenbar sind, dass die Auflageausnehmung (6) und die Hülsenausnehmung (10) koaxial zueinander angeordnet sind, wobei die Auflageausnehmung (6) und die Hülsenausnehmung (10) zur Durchführung eines Schafts eines Befestigungsmittels zum Verbinden des Achshilfsrahmens (2) mit der Karosserie ausgebildet sind, wobei die Karosserieseite (4) eine Anlagefläche (14) zur Anlage der Karosserie aufweist, **dadurch gekennzeichnet, dass** das Auflageteil (3) eine größere Härte als die Hülse (7) aufweist, wobei das Auflageteil (3) vergütet und die Hülse (7) nicht vergütet ist, und wobei das Auflageteil (3) mindestens eine strukturierte Oberfläche (15) aufweist.

2. Befestigungssystem (1) nach Anspruch 1,
**dadurch gekennzeichnet,**
**dass** die Hülse (7) mindestens eine strukturierte Oberfläche (15) aufweist.

3. Befestigungssystem (1) nach Anspruch 1 oder 2,
**dadurch gekennzeichnet,**
**dass** die strukturierte Oberfläche (15) eine Verzahnung (16) und/oder eine rutschhemmende Oberfläche aufweist.

4. Befestigungssystem (1) nach einem der Ansprüche 1 bis 3,
**dadurch gekennzeichnet,**
**dass** die strukturierte Oberfläche (15) auf mindestens der Karosserieseite (4) des Auflageteils (3) und/oder der Stirnseite des zweiten Endbereichs (9) der Hülse (7) angeordnet ist.

5. Befestigungssystem (1) nach einem der vorangehenden Ansprüche,
**dadurch gekennzeichnet,**
**dass** das Auflageteil (3) auf der Hilfsrahmenseite (5) an der Auflageausnehmung (6) eine Abrundung (17) und/oder Fase aufweist.

6. Befestigungssystem (1) nach einem der vorangehenden Ansprüche,
**dadurch gekennzeichnet,**
**dass** das Auflageteil (3) eine Aussparung (18) zur Aufnahme eines Abschnitts des ersten Endbereichs (8) der Hülse (7) aufweist.

7. Befestigungssystem (1) nach einem der vorangehenden Ansprüche,
**dadurch gekennzeichnet,**
**dass** das Auflageteil (3) zur Befestigung an der ersten Wand (12) des Hilfsrahmens (2) auf der Hilfsrahmenseite (5) einen größeren Umfang als auf der Karosserieseite (4) aufweist.

8. Befestigungssystem (1) nach einem der vorangehenden Ansprüche,
**dadurch gekennzeichnet,**
**dass** das Auflageteil (3) zur Befestigung an der ersten Wand (12) des Hilfsrahmens (2) auf der Hilfsrahmenseite (5) einen Flansch (19) aufweist.

9. Befestigungssystem (1) nach einem der vorangehenden Ansprüche,
**dadurch gekennzeichnet,**
**dass** die Hülse (7) zur Befestigung an der zweiten Wand (13) im zweiten Endbereich (9) einen größeren Umfang als im ersten Endbereich (8) aufweist.

10. Befestigungssystem (1) nach einem der vorangehenden Ansprüche,
**dadurch gekennzeichnet,**
**dass** das Auflageteil (3) und/oder die Hülse (7) aus einem schweißbaren Material ausgebildet sind.

11. Achshilfsrahmen (2) zur Anbindung einer Achse an eine Karosserie eines Fahrzeugs, aufweisend ein Hilfsrahmenoberteil (20) mit einer ersten Wand (12) und ein Hilfsrahmenunterteil (21) mit einer zweiten Wand (13), wobei das Hilfsrahmenoberteil (20) und das Hilfsrahmenunterteil (21) miteinander verbunden sind, wobei die erste Wand (12) mindestens eine erste Ausnehmung (22) und die zweite Wand (13) mindestens eine zweite Ausnehmung (23) aufweisen, wobei die mindestens eine erste Ausnehmung (22) und die mindestens eine zweite Ausnehmung (23) voneinander beabstandet sowie miteinander fluchtend angeordnet sind,
**dadurch gekennzeichnet,**
**dass** der Achshilfsrahmen (2) zur Anbindung an die Karosserie ein Befestigungssystem (1) nach einem der vorangehenden Ansprüche aufweist, wobei das Auflageteil (3) mit der ersten Ausnehmung (22) fluchtend an der ersten Wand (12) und die Hülse (7) an der zweiten Wand (13) angeordnet sind, wobei sich die Hülse (7) durch die zweite Ausnehmung (23) hindurch bis zur ersten Wand (12) hin oder bis zum Auflageteil (3) erstreckt.

12. Achshilfsrahmen (2) nach Anspruch 11,
**dadurch gekennzeichnet,**
**dass** das Auflageteil (3) und/oder die Hülse (7) an dem Achshilfsrahmen (2) angeschweißt sind.

13. Achshilfsrahmen (2) nach Anspruch 11 oder 12,
**dadurch gekennzeichnet,**
**dass** die Hülse (7) an der ersten Wand (12) anliegt.

14. Achshilfsrahmen (2) nach einem der Ansprüche 11 bis 13,
**dadurch gekennzeichnet,**
**dass** die Hülsenausnehmung (10) einen Innendurchmesser aufweist, der größer als ein Innendurchmesser der Auflageausnehmung (6) und kleiner als ein Innendurchmesser der ersten Ausnehmung (22) und/oder der zweiten Ausnehmung (23) ist.

## Claims

1. Fastening system (1) for attaching an axle subframe (2) to a body of a vehicle, having a bearing part (3) with a body side (4), a subframe side (5) and a bearing aperture (6), and a sleeve (7) with a first end region (8), a second end region (9) and a sleeve aperture (10), wherein the subframe side (5) of the bearing part (3) can be arranged on a first side (11) of a first wall (12) of the axle subframe (2), and the second end region (9) of the sleeve (7) can be arranged on a second wall (13) of the axle subframe (2), in such a way that the bearing aperture (6) and the sleeve aperture (10) are arranged coaxially to one another, wherein the bearing aperture (6) and the sleeve aperture (10) are designed for the passage of a shaft of a fastening means for connecting the axle subframe (2) to the body, wherein the body side (4) has a bearing face (14) for the bearing of the body,
**characterized in that** the bearing part (3) has a greater hardness than the sleeve (7), wherein the bearing part (3) is tempered and the sleeve (7) is not tempered, and wherein the bearing part (3) has at least one structured surface (15).

2. Fastening system (1) according to Claim 1,
**characterized**
**in that** the sleeve (7) has at least one structured surface (15).

3. Fastening system (1) according to Claim 1 or 2,
**characterized**
**in that** the structured surface (15) has a toothing (16) and/or an anti-slip surface.

4. Fastening system (1) according to one of Claims 1 to 3,
**characterized**
**in that** the structured surface (15) is arranged on at least the body side (4) of the bearing part (3) and/or on the end side of the second end region (9) of the sleeve (7).

5. Fastening system (1) according to one of the preceding claims,
**characterized**
**in that** the bearing part (3) has, on the subframe side (5) at the bearing aperture (6), a rounded-off portion (17) and/or bevel.

6. Fastening system (1) according to one of the preceding claims,
**characterized**
**in that** the bearing part (3) has a recess (18) for receiving a portion of the first end region (8) of the sleeve (7).

7. Fastening system (1) according to one of the preceding claims,
**characterized**
**in that**, for fastening to the first wall (12) of the subframe (2), the bearing part (3) has a greater circumference on the subframe side (5) than on the body side (4).

8. Fastening system (1) according to one of the preceding claims,
**characterized**
**in that**, for fastening to the first wall (12) of the subframe (2), the bearing part (3) has a flange (19) on the subframe side (5).

9. Fastening system (1) according to one of the preceding claims,
**characterized**
**in that**, for fastening to the second wall (13), the sleeve (7) has a greater circumference in the second end region (9) than in the first end region (8) .

10. Fastening system (1) according to one of the preceding claims,
**characterized**
**in that** the bearing part (3) and/or the sleeve (7) are/is formed from a weldable material.

11. Axle subframe (2) for attaching an axle to a body of a vehicle, having a subframe upper part (20) with a first wall (12) and a subframe lower part (21) with a second wall (13), wherein the subframe upper part (20) and the subframe lower part (21) are connected to one another, wherein the first wall (12) has at least one first aperture (22) and the second wall (13) has at least one second aperture (23), wherein the at least one first aperture (22) and the at least one second aperture (23) are arranged at a distance from one another and in alignment with one another,
**characterized**
**in that**, for attachment to the body, the axle subframe (2) has a fastening system (1) according to one of the preceding claims, wherein the bearing part (3) is arranged on the first wall (12) so as to be in alignment with the first aperture (22) and the sleeve (7) is arranged on the second wall (13), wherein the sleeve (7) extends through the second aperture (23) as far as the first wall (12) or up to the bearing part (3).

12. Axle subframe (2) according to Claim 11,
**characterized**
**in that** the bearing part (3) and/or the sleeve (7) are/is welded to the axle subframe (2).

13. Axle subframe (2) according to Claim 11 or 12,
**characterized**
**in that** the sleeve (7) bears against the first wall (12) .

14. Axle subframe (2) according to one of Claims 11 to 13,
**characterized**
**in that** the sleeve aperture (10) has an inside diameter which is greater than an inside diameter of the bearing aperture (6) and less than an inside diameter of the first aperture (22) and/or of the second aperture (23).

## Revendications

1. Système de fixation (1) pour la liaison d'un cadre auxiliaire (2) à une carrosserie d'un véhicule, présentant une partie d'appui (3) avec un côté carrosserie (4), un côté cadre auxiliaire (5) ainsi qu'une cavité d'appui (6) et une douille (7) avec une première région d'extrémité (8), une deuxième région d'extrémité (9) ainsi qu'une cavité de douille (10), dans lequel le côté cadre auxiliaire (5) de la partie d'appui (3) peut être disposée sur un premier côté (11) d'une première paroi (12) du cadre auxiliaire (2) et la deuxième région d'extrémité (9) de la douille (7) peut être disposée sur une deuxième paroi (13) du cadre auxiliaire (2), de telle manière que la cavité d'appui (6) et la cavité de douille (10) soient disposées de façon coaxiale l'une à l'autre, dans lequel la cavité d'appui (9) et la cavité de douille (10) sont configurées en vue du passage d'une tige d'un moyen de fixation pour assembler le cadre auxiliaire (2) à la carrosserie, dans lequel le côté carrosserie (4) présente une face d'appui (14) pour l'appui de la carrosserie, **caractérisé en ce que** la partie d'appui (3) présente une dureté plus élevée que la douille (7), dans lequel la partie d'appui (3) est traitée thermiquement et la douille (7) n'est pas traitée thermiquement, et dans lequel la partie d'appui (3) présente au moins une surface structurée (15).

2. Système de fixation (1) selon la revendication 1, **caractérisé en ce que** la douille (7) présente au moins une surface structurée (15).

3. Système de fixation (1) selon la revendication 1 ou 2, **caractérisé en ce que** la surface structurée (15) présente une denture (16) et/ou une surface antidérapante.

4. Système de fixation (1) selon l'une quelconque des revendications 1 à 3, **caractérisé en ce que** la surface structurée (15) est disposée sur au moins le côté carrosserie (4) de la partie d'appui (3) et/ou sur le côté frontal de la deuxième région d'extrémité (9) de la douille (7).

5. Système de fixation (1) selon l'une quelconque des revendications précédentes, **caractérisé en ce que** la partie d'appui (3) présente sur le côté cadre auxiliaire (5) à la cavité d'appui (6) un arrondi (17) et/ou un chanfrein.

6. Système de fixation (1) selon l'une quelconque des revendications précédentes, **caractérisé en ce que** la partie d'appui (3) présente une découpe (18) destinée à recevoir une partie de la première région d'extrémité (8) de la douille (7).

7. Système de fixation (1) selon l'une quelconque des revendications précédentes, **caractérisé en ce que** la partie d'appui (3) à fixer à la première paroi (12) du cadre auxiliaire (2) présente une plus grande étendue sur le côté cadre auxiliaire (5) que sur le côté carrosserie (4) .

8. Système de fixation (1) selon l'une quelconque des revendications précédentes, **caractérisé en ce que** la partie d'appui (3) à fixer à la première paroi (12) du cadre auxiliaire (2) présente une aile (19) sur le côté cadre auxiliaire (5).

9. Système de fixation (1) selon l'une quelconque des revendications précédentes, **caractérisé en ce que** la douille (7) à fixer à la deuxième paroi (13) présente une plus grande étendue dans la deuxième région d'extrémité (9) que dans la première région d'extrémité (8).

10. Système de fixation (1) selon l'une quelconque des revendications précédentes, **caractérisé en ce que** la partie d'appui (3) et/ou la douille (7) sont fabriquées en un matériau soudable.

11. Cadre auxiliaire (2) pour la liaison d'un essieu à une carrosserie d'un véhicule, présentant une partie supérieure de cadre auxiliaire (20) avec une première paroi (12) et une partie inférieure de cadre auxiliaire (21) avec une deuxième paroi (13), dans lequel la partie supérieure de cadre auxiliaire (20) et la partie inférieure de cadre auxiliaire (21) sont assemblées l'une à l'autre, dans lequel la première paroi (12) présente au moins une première cavité (22) et la deuxième paroi (13) présente au moins une deuxième cavité (23), dans lequel ladite au moins une première cavité (22) et ladite au moins une deuxième cavité (23) sont espacées l'une de l'autre et sont en alignement l'une avec l'autre, **caractérisé en ce que** le cadre auxiliaire (2) présente pour la liaison à la carrosserie un système de fixation (1) selon l'une quelconque des revendications précédentes, dans lequel la partie d'appui (3) est disposée en alignement avec la première cavité (22) sur la première paroi (12) et la douille (7) est disposée sur la deuxième paroi (13), dans lequel la douille (7) s'étend à travers la deuxième cavité (23) jusqu'à la première paroi (12) ou jusqu'à la partie d'appui (3).

12. Cadre auxiliaire (2) selon la revendication 11, **caractérisé en ce que** la partie d'appui (3) et/ou la douille (7) sont soudées sur le cadre auxiliaire (2).

13. Cadre auxiliaire (2) selon la revendication 11 ou 12, **caractérisé en ce que** la douille (7) s'applique sur la première paroi (12).

14. Cadre auxiliaire (2) selon l'une quelconque des revendications 11 à 13, **caractérisé en ce que** la cavité de douille (10) présente un diamètre intérieur, qui est plus grand qu'un diamètre intérieur de la cavité d'appui (6) et plus petit qu'un diamètre intérieur de la première cavité (22) et/ou de la deuxième cavité (23).
